# EUROPÄISCHE PATENTSCHRIFT

(11) **EP 1 319 263 B1**
(45) Veröffentlichungstag und Bekanntmachung des Hinweises auf die Patenterteilung: **28.06.2006**
(21) Anmeldenummer: 01960640.9
(22) Anmeldetag: 09.08.2001
(51) Int. Cl.: H02G 3/06, F16L 45/00

(54) **ANBAUGEHÄUSE**
ADD-ON HOUSING
BOITIER POUR ELEMENT RAPPORTE

(30) Priorität: 11.09.2000 DE 10044791
(43) Veröffentlichungstag der Anmeldung: 18.06.2003
(73) Patentinhaber: Contact GmbH, 70565 Stuttgart (DE)
(72) Erfinder: HÜLSMANN, Ingrid, 70825 Korntal-Münchingen (DE); ANDRÄ, Frank, 73779 Deizisau (DE)
(74) Vertreter: Schmidt, Steffen J.
(86) Internationale Anmeldenummer: PCT/EP2001/009227
(87) Internationale Veröffentlichungsnummer: WO 2002/021655

(56) Entgegenhaltungen:
- US-A- 2 967 722
- US-A- 3 624 794
- US-A- 5 901 986

## Beschreibung

### Gebiet der Erfindung

Die vorliegende Erfindung betrifft ein Anbaugehäuse für elektrische und/oder optische Leiter, Fluidleitungen und mechanische Komponenten, wie z.B. Gelenkwellen oder Bowdenzüge. Insbesondere betrifft die vorliegende Erfindung ein gewinkeltes Anbaugehäuse, das im konfektionierten Zustand an einer entsprechenden Befestigungsoberfläche angebracht werden kann, wobei zum Zugriff auf die Durchführung des Anbaugehäuses ein an dem Körper desselben auf einfache Weise arretierbarer Deckel verwendet wird.

### Hintergrund der Erfindung

Um beispielsweise Steckverbinder für elektrische und/oder optische Leiter an einem Gehäuse eines Schaltschrankes anzubringen, werden sogenannte Anbaugehäuse verwendet. Die Anbaugehäuse werden an einer äußeren Oberfläche des Schaltschrankgehäuses befestigt und weisen eine mit dem Inneren des Schaltschrankes in Verbindung stehende Durchführung auf. Die Durchführung dient zur Führung von elektrischen und/oder optischen Leitern aus dem Schaltschrank zu einem Steckverbinder, der an dem Anbaugehäuse befestigt ist. Anbaugehäuse sind insbesondere dann erforderlich, wenn für Schaltschränke Steckverbinder bereitgestellt werden sollen, die nicht senkrecht zu einer entsprechenden Schaltschrankgehäuseoberfläche anzuordnen sind. In diesen Fällen werden gewinkelte, beispielsweise um 90° gewinkelte, und gekrümmte Anbaugehäuse verwendet.

Zur Konfektionierung der Anbaugehäuse können diese Zugriffsöffnungen auf die Durchführungen aufweisen, die unter Verwendung von Deckeln verschlossen werden können. Üblicherweise werden solche Deckel an dem Körper eines Anbaugehäuses verschraubt, um die Zugriffsöffnung zum Teil unter Verwendung geeigneter Dichtelemente dicht zu verschließen. Ferner ist es bekannt, solche Deckel unter Verwendung geeigneter Rast- oder Schnappverbindungen an dem Anbaugehäusekörper zu sichern.

Aus der DE 34 03 774 A1 ist eine winkelförmige Leitungseinführung mit einem im Bereich einer Stirnseite am äußeren Rand schwenkbar angelenkten Verschlußteil bekannt. Um das Verschlußteil in seiner Schließstellung zu halten, ist an seiner anderen Stirnseite ein Schnappverschluß vorgesehen. Dieser Schnappverschluß wird von einem an einem Winkelschenkel der Leitungseinführung ausgebildeten Vorsprung und einer an dem Verschlußteil ausgebildeten Nut, in der der Vorsprung beim Schließen des Verschlußteils verrastet, gebildet.

Dieser Ansatz erschwert ein Entfernen eines Deckels, wenn beispielsweise für Wartungsarbeiten auf die Durchführung des Anbaugehäuses zugegriffen werden soll. Hierbei ist das Entfernen eines Deckels im allgemeinen nicht ohne spezielle Werkzeuge möglich. Bei der Verwendung verschraubbarer Deckel sind schon bei dem Verschließen der Zugriffsöffnung zusätzliche Werkzeuge erforderlich.

Außerdem ist es im allgemeinen nicht möglich, ein Anbaugehäuse beispielsweise an einem Schaltschrank zu befestigen, bevor das Anbaugehäuse mit entsprechenden elektrischen und/oder optischen Leitern und/oder Steckverbindern konfektioniert wurde.

Vergleichbare Probleme ergeben sich, wenn Anbaugehäuse für (flexible) Fluidleitungen, mechanische Komponenten, wie z.B. Gelenkwellen oder Bowdenzügen, und dergleichen verwendet werden, um diese (abgewinkelt) aus einem Gehäuse einer entsprechenden Vorrichtung zu führen. Aus der DE 297 07 529 U1 ist eine Kabeldurchführung bekannt, die an einem Kabel und an einem in seinem Innenraum die Adern des Kabels aufnehmenden Gehäuse befestigbar ist. Zur Befestigung der Kabeldurchführung an dem Gehäuse weist ein Ende der Kabeldurchführung einen Flansch mit darin ausgebildeten Bohrungen auf.

US 5,901,986 und US 3,624,794 offenbaren ein Anbaugehäuse für elektrische Leiter, das eine Gehäusekörper, eine sich durch den Gehäusekörper erstreckenden Durchführung, eine Zugriffsöffnung auf die Durchführung durch den Gehäusekörper, einen Deckel zum Verschließen und Freigeben der Zugriffsöffnung, und eine Halteeinrichtung zum Sichern des Deckels in dessen geschlossenem Zustand mittels einer Klemmverbindung an dem Gehäusekörper aufweist. Gemäß US 5,901,986 ist der Deckel in den Gehäusekörper einsteckbar. Gemäß US 3,624,794 kann der Deckel mit dem schwenkbar verbunden sein.

### Aufgabe der Erfindung

Aufgabe der vorliegenden Erfindung ist es, ein Anbaugehäuse für die genannten unter Verwendung eines Anbaugehäuses zu führenden Komponenten bereitzustellen, das auf einfache Weise konfektioniert werden kann, das jederzeit einen einfachen Zugriff auf den Anbaugehäuseinnenraum erlaubt, und das ein dichtes Verschließen der Zugriffsöffnung auf den Anbaugehäuseinnenraum bzw. deren Freigabe ohne spezielle Werkzeuge ermöglicht. Außerdem soll die Erfindung ein Anbaugehäuse bereitstellen, das in konfektioniertem Zustand an einer entsprechenden Befestigungsfläche angebracht werden kann.

### Kurzbeschreibung der Erfindung

Hierfür stellt die Erfindung ein Anbaugehäuse für elektrische und/oder optische Leiter, Fluidleitungen, mechanische Komponenten, wie z.B. Gelenkwellen oder Bowdenzüge, und dergleichen gemäß Anspruch 1 bereit.

Das Anbaugehäuse weist einen Gehäusekörper, eine sich durch den Gehäusekörper erstreckende Durchführung, eine Zugriffsöffnung auf die Durchführung durch den Gehäusekörper, einen mit dem Gehäusekörper bewegbar verbundenen Deckel zum Verschließen und Freigeben der Zugriffsöffnung, und eine Halteeinrichtung zum Sichern des Deckels in dessen geschlossenem Zustand mittels einer Klemmverbindung an dem Gehäusekörper auf.

Der Deckel weist einen verlängerten Bereich auf, der im geschlossenen Zustand des Deckels zwischen der Halteeinrichtung und dem Gehäusekörper gesichert (eingeklemmt) ist.

Erfindungsgemäß umfasst der verlängerte Bereich des Deckels einen konturierten Bereich, der beispielsweise in dem Deckel ausgebildete Ausnehmungen (Längsrillen, Querrillen) aufweist.

Um die Sicherung des Deckels zu verbessern, weist der Gehäusekörper einen Kontaktbereich für den verlängerten Bereich des Deckels auf, wobei diese Bereiche vorzugsweise formschlüssig ausgebildet sind. Dieser Formschluß zwischen dem verlängerten Bereich und dem Kontaktbereich verbessert die Klemmwirkung der Halteeinrichtung im gesicherten Zustand des Deckels.

Wenn der verlängerte Bereich wenigstens in dem konturierten Bereich elastisch verformbar ist, dient der verlängerte Bereich zusätzlich als Vibrationsschutz für den Deckel.

Um die Zugriffsöffnung im geschlossenen Zustand des Deckels dicht zu verschließen, ist im Bereich der Zugriffsöffnung ein Dichtelement (z.B. ein O-Ring) angeordnet. Wenn das Dichtelement elastisch ist, so daß es im geschlossenen und gesicherten Zustand des Deckels aufgrund einer Wirkverbindung mit diesem elastisch verformt ist, tragen die so entstehenden auf den Deckel wirkenden Kräfte zur Sicherung des Deckels bei.

Als Halteeinrichtung kann eine Haltemutter oder eine auf den Gehäusekörper aufschiebbare Hülse verwendet werden. Im Falle der Verwendung einer Haltemutter weist der Gehäusekörper ein Gewinde zum Anbringen derselben auf. Hierbei ist es vorgesehen, daß das Gewinde für die Haltemutter in Längsrichtung der Durchführung von dem Kontaktbereich beabstandet ist oder den Kontaktbereich umfaßt.

Bei der Verwendung einer aufschiebbaren Haltehülse ist diese an dem Gehäusekörper zu sichern, so daß sie beispielsweise aufgrund der von dem Dichtelement im Bereich der Zugriffsöffnung und/oder dem verlängerten Bereich des Deckels erzeugten elastischen Kräfte nicht verschoben wird. Hierfür können an dem Gehäusekörper Rastelemente und/oder Klemmelemente ausgebildet sein. Beispiele für die Rastelemente sind zur Herstellung von Rast- oder Schnappverbindungen geeignete Strukturen oder Komponenten für Bajonettverschlüsse. Als Klemmelemente können beispielsweise keilförmig an dem Gehäusekörper ausgebildete Strukturen verwendet werden.

Um die Haltehülse lösbar an dem Gehäusekörper zu sichern, können die Rastelemente und/oder die Klemmelemente entsprechend bewegbar und/oder elastisch verformbar sein. Hierbei ist es auch möglich, eine elastisch verformbare Haltehülse zu verwenden, die zum Lösen ihrer Sicherung an dem Gehäusekörper elastisch verformt wird.

Um das Anbaugehäuse an einer entsprechenden Befestigungsoberfläche auch im konfektionierten Zustand anbringen zu können, weist der Gehäusekörper an einem ersten Ende einen Befestigungsflansch mit durch diesen ausgebildeten Bohrungen auf. Insbesondere sind die Bohrungen des Befestigungsflansches so angeordnet, daß auf sie auch im geschlossenen Zustand des Deckels zugegriffen werden kann, um beispielsweise Befestigungsschrauben einzuführen.

Alternativ oder ergänzend kann hierfür der Gehäusekörper an seinem ersten Ende Rast- oder Schnappelemente aufweisen, die im geschlossenen Zustand des Deckels zum Montieren und Demontieren des Anbaugehäuses betätigbar sind.

Bei einer Ausführungsform ist der Deckel unter Verwendung von an dem Deckel und dem Gehäusekörper, vorzugsweise an seinem ersten Ende, ausgebildeten Strukturen (z.B. ein Scharnier bildende Nasen) in den Gehäusekörper bewegbar eingehängt. Diese Konstruktion erlaubt eine einfache Herstellung des Anbaugehäuses, wobei es zusätzlich möglich ist, beispielsweise zum Konfektionieren des Anbaugehäuses den Deckel von dem Gehäusekörper zu entfernen (auszuhängen). Diese bewegbare Verbindung kann auch mittels in Wirkverbindung mit dem Deckel und dem Gehäusekörper stehenden Achsen und/oder Zapfen hergestellt werden, wodurch zwar ein Entfernen des Deckels erschwert, aber dessen Verbindung mit dem Gehäusekörper stabiler gemacht wird.

Ferner kann der Gehäusekörper an einem zweiten dem ersten Ende gegenüberliegenden Ende Befestigungselemente aufweisen, um an dem Anbaugehäuse anzuordnende Vorrichtungen zu befestigen. Beispiele für solche Vorrichtungen Steckverbinder für elektrische und/oder optische Leiter, Anschlüsse für Fluidleitungen, und dergleichen. In Abhängigkeit der anzuordnenden Vorrichtungen können diese Befestigungselemente des Gehäusekörpers an diesem ausgebildete Gewinde, Schnapp- und/oder Rastelemente, oder Strukturen für Bajonettverschlüsse sein.

Zur Sicherung der Halteeinrichtung umfaßt das Anbaugehäuse Komponenten, die ein Entfernen der Halteeinrichtung verhindern. Vorzugsweise umfassen diese Sicherungskomponenten für die Halteeinrichtung eine in dem Gehäusekörper ausgeformte Nut und einen an dem Gehäusekörper in Wirkverbindung mit der Nut anbringbaren O-Ring. Hierbei ist der O-Ring so dimensioniert, daß die Halteeinrichtung nicht von dem Gehäusekörper entfernt werden kann. Darüber hinaus dient ein solcher O-Ring auch als Dichtelement und Vibrationsschutz für eine der zuvor genannten an dem Gehäusekörper anbringbaren Vorrichtung.

Vorzugsweise ist der Gehäusekörper ein gekrümmter oder abgewinkelter (z.B. um 90°) Körper, wobei auch ein langgestreckter Gehäusekörper verwendet werden kann, wenn auf dessen Durchführung im Bereich der Verbindung zu der entsprechenden Befestigungsoberfläche zugegriffen werden soll.

Hierbei ist es vorgesehen, daß die Durchführung durch den Gehäusekörper einen im wesentlichen runden oder rechteckigen Querschnitt hat, wobei der Gehäusekörper, insbesondere im Fall der Verwendung einer Haltemutter, in Längsrichtung der Durchführung zumindest im Bereich des Gewindes einen runden Querschnitt hat.

### Kurzbeschreibung der Figuren

Bei der Beschreibung bevorzugter Ausführungsformen wird auf die beigefügten Figuren Bezug genommen, von denen zeigen:
- Fig. 1: eine schematische Seitenansicht einer bevorzugten Ausführungsform eines erfindungsgemäßen Anbaugehäuses,
- Fig. 2 und 3: perspektivische Ansichten des Anbaugehäuses von Fig. 1,
- Fig. 4: eine Seitenansicht des Anbaugehäuses von Fig. 1 in zusammengebautem Zustand,
- Fig. 5: eine Aufsicht des Anbaugehäuses von Fig. 4,
- Fig. 6: eine weitere Seitenansicht des Anbaugehäuses von Fig. 4, und
- Fig. 7a-7d: weitere Ausführungsformen erfindungsgemäßer Anbaugehäuse.

### Beschreibung bevorzugter Ausführungsformen

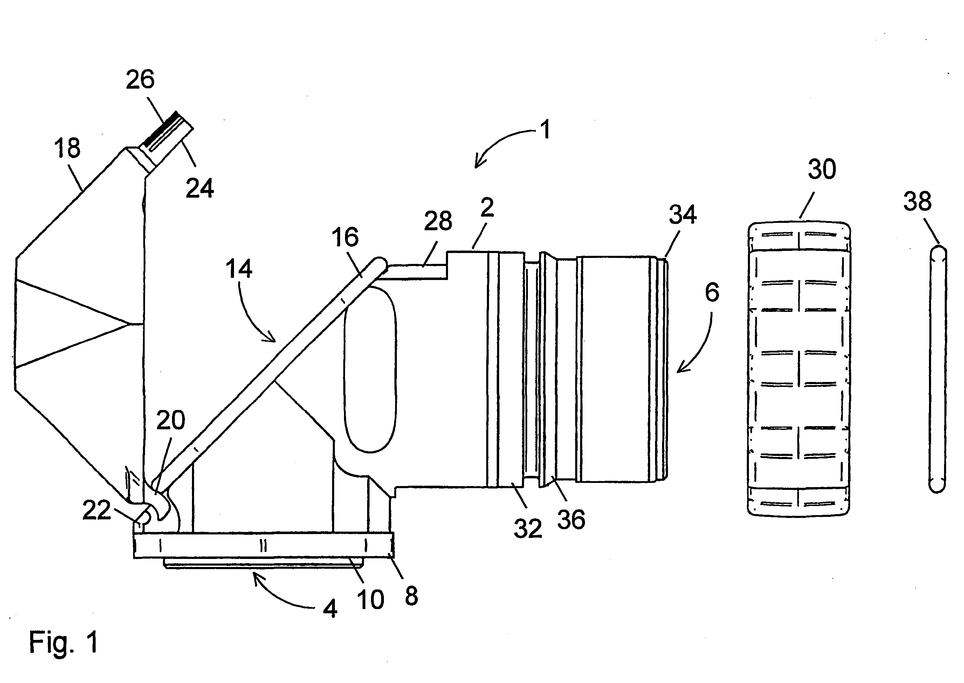

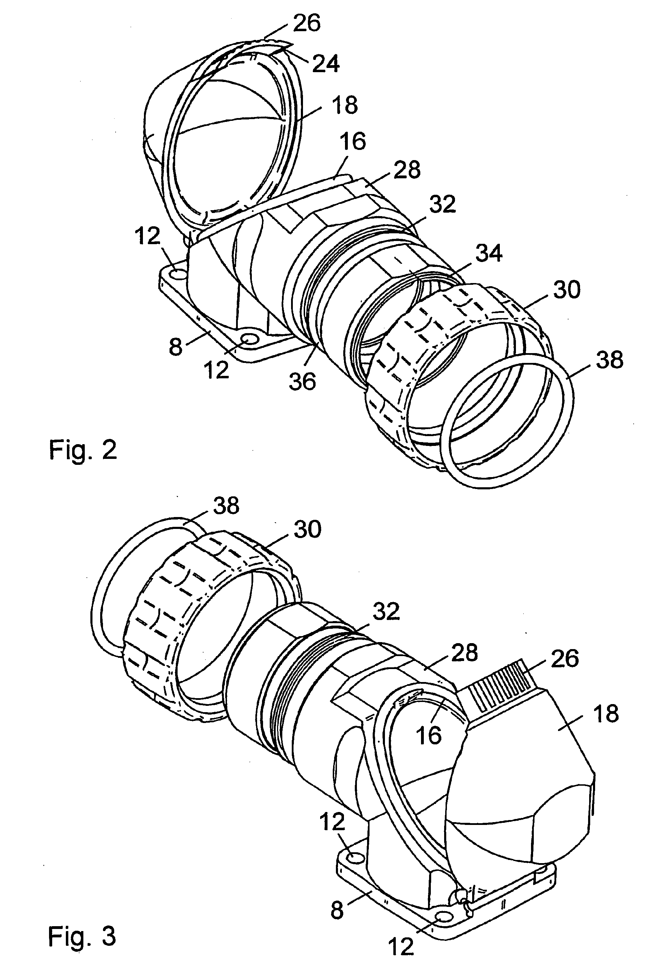

Das in den Fig. 1 bis 6 gezeigte Anbaugehäuse 1 umfaßt einen um 90° abgewinkelten Gehäusekörper 2, durch den sich zwischen Öffnungen 4 und 6 eine Leiterdurchführung (nicht bezeichnet) erstreckt. Die Leiterdurchführung hat einen im wesentlichen runden Querschnitt und dient zur Aufnahme von Leitern für elektrische und/oder optische Signale. Wie erwähnt, kann das Anbaugehäuse 1 auch zur Aufnahme anderer Leitungen und Komponenten verwendet werden, wie z.B. Fluidleitungen, Bowdenzüge und Gelenkwellen.

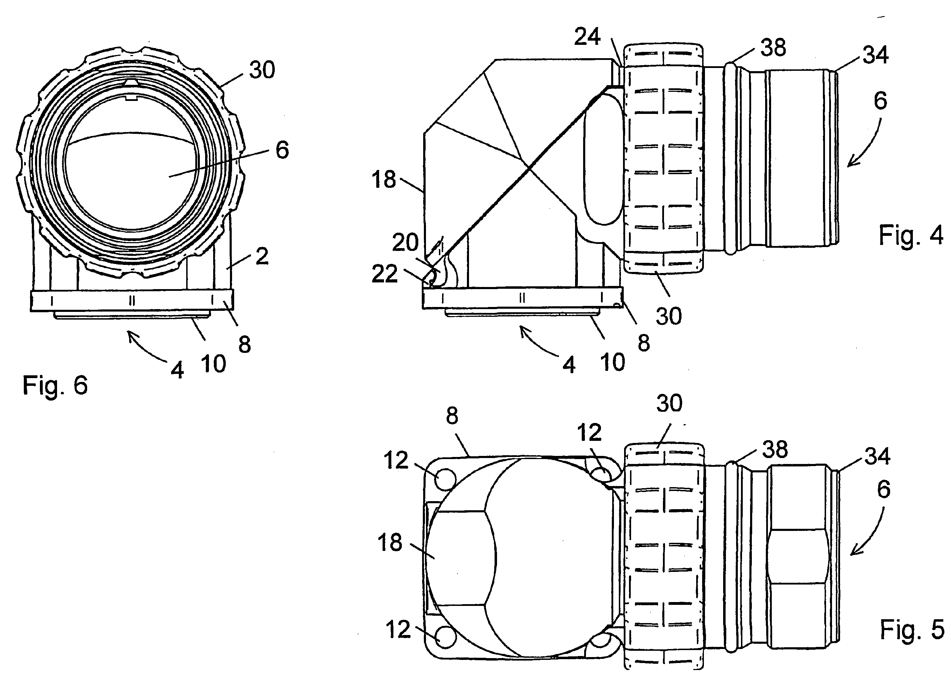

An seinem Ende im Bereich der Öffnung 4 weist der Gehäusekörper 2 einen Befestigungsflansch 8 und einen an diesem ausgebildeten Absatz 10 auf. Wie in Fig. 5 zu sehen, hat der Befestigungsflansch 8 einen im wesentlichen rechteckigen Querschnitt und weist in seinen Eckbereichen jeweils eine Bohrung 12 auf. Der Befestigungsflansch 8 und dessen Bohrungen 12 dienen zur Befestigung des Anbaugehäuses 1 an einer Oberfläche, beispielsweise eines elektrischen Schaltschrankes. Der Absatz 10 hat im Bereich der Öffnung 4 einen im wesentlichen dem Querschnitt der Kabeldurchführung (nicht bezeichnet) entsprechenden Querschnitt und wird bei einer Montage des Anbaugehäuses 1 in eine Öffnung in der Oberfläche eingeführt, an der das Anbaugehäuse 1 befestigt werden soll. Um den Übergang zwischen dem Anbaugehäuse 1 und der entsprechenden Befestigungsoberfläche abzudichten, kann die in Fig. 1 untere Oberfläche des Befestigungsflansches 8 und/oder die äußere Umfangsfläche des Absatzes 10 eine Dichtung aufweisen. Die Dichtung kann in Form eines O-Ringes, einer Beschichtung, einer Flachdichtung und dergleichen bereitgestellt werden, und kann je nach gewähltem Dichtungstyp auch als Vibrationsschutz dienen.

Zur Konfektionierung des Anbaugehäuses 1, d.h. zum Anordnen von Leitern in dessen Leiterdurchführung, weist der Gehäusekörper 2 in seinem gewinkelten Bereich eine Zugriffsöffnung 14 auf, die aufgrund des Querschnitts der Kabeldurchführung einen im wesentlichen runden Querschnitt hat. In Abhängigkeit des für die Kabeldurchführung gewählten Querschnitts kann die Zugriffsöffnung 14 andere Querschnittsformen haben. Im Bereich des Umfanges der Zugriffsöffnung 14 ist ein O-Ring 16 als Dichtung angeordnet.

Zum Freigeben und Verschließen der Zugriffsöffnung 14 dient ein Deckel 18, der im Bereich der in Fig. 1 oben gezeigten Stirnfläche des Befestigungsflansches 8 eingehängt ist. Hierfür dienen die an dem Deckel 18 und dem Befestigungsflansch 8 ausgebildeten Nasen 20 und 22. Anstelle der, wie in Fig. 3 zu sehen, länglich ausgebildeten Nasen 20 und 22, die zum Bewegen des Deckels 18 als Scharnier dienen, können auch durch entsprechende Öffnungen oder Halterungen (nicht gezeigt) des Deckels 18 und des Befestigungsflansches 8 geführte Achsen oder Zapfen (nicht gezeigt) verwendet werden.

An seinem der Nase 20 gegenüberliegendem Ende weist der Deckel 18 einen sogenannten Vibrationsschutz 24 auf, der von einem an dem Deckel 18 ausgebildeten Ansatz gebildet wird. Der Vibrationsschutz 24 hat, wie am besten in Fig. 3 zu sehen, an einer Außenfläche einen konturierten Bereich 26. Der konturierte Bereich 26 umfaßt in dem Vibrationsschutz 24 ausgebildete Längsrillen, wobei es auch vorgesehen ist, Querrillen oder andere Strukturen zu verwenden, die auch an beiden Außenflächen des Vibrationsschutzes 24 angeordnet sein können, solange die im folgenden beschriebene Funktion des Vibrationsschutzes 24 bereitgestellt wird.

Der Gehäusekörper 2 weist in einem in den Fig. 1, 2 und 3 oben dargestellten Bereich seiner Außenumfangsfläche eine Preßfläche 28 auf. Die Preßfläche 28 dient als Gegenlager für den Vibrationsschutz 24, wenn der Deckel 18 zum Verschließen der Zugriffsöffnung 14 so bewegt wird, daß er den Gehäusekörper 2 kontaktiert. Im geschlossenen Zustand des Deckels 18 dichtet der O-Ring 16 die Zugriffsöffnung 14 ab. Zur Sicherung des Deckels 18 in seinem geschlossenen Zustand an dem Gehäusekörper 2 wird eine Haltemutter 30 verwendet, die mittels eines Gewindes 32 auf den Gehäusekörper 2 aufgeschraubt wird.

Die Haltemutter 30 und/oder das Gewinde 32 sind so gestaltet, daß der Vibrationsschutz 24 zwischen der Haltemutter 30 und der Preßfläche 28 eingeklemmt wird, wenn die Haltemutter 30 auf den Gehäusekörper 2 aufgeschraubt ist. Dieser geschlossenen bzw. zusammengebaute Zustand des Anbaugehäuses 1 ist in den Fig. 4, 5 und 6 dargestellt. Durch den zwischen der Haltemutter 30 und der Preßfläche 28 gesicherten Vibrationsschutz 24 und insbesondere durch dessen konturierten Bereich 26 wird ein Vibrationsschutz für das Anbaugehäuse 1, genauer für den Deckel 18, bereitgestellt. Im einfachsten Fall wird die Haltemutter 30 so weit auf den Gehäusekörper 2 aufgeschraubt, daß der konturierte Bereich 26 das an der inneren Umfangsfläche der Haltemutter 30 angeordnete Gewinde (nicht gezeigt) kontaktiert. Es können aber auch Haltemuttern verwendet werden, die einen Bereich auf inneren Umfangsfläche ohne Gewinde aufweisen, der im zusammengeschraubten Zustand den Vibrationsschutz 24 gegen die Preßfläche 28 drückt. Dies erfordert zwar spezielle Haltemuttern, erlaubt es aber, das Gewinde 32 in Längsrichtung des entsprechenden Bereiches des Gehäusekörpers 2 kürzer auszugestalten und/oder in geringerem Abstand zu der Öffnung 6 anzuordnen.

Aufgrund der Verwendung der Haltemutter 30 zur Sicherung des Deckels 18 in seinem geschlossenen Zustand werden keine zusätzlichen Werkzeuge benötigt. Ferner werden dadurch die für die drehbare Verbindung des Deckels 18 mit dem Gehäusekörper 2 einzuhaltenden Toleranzen größer, da die aufgeschraubte Haltemutter 30 den Deckel 18 so gegen den O-Ring 16 drückt, daß die Zugriffsöffnung 14 dicht verschlossen ist. Auch die Montage des Deckels 18 an dem Gehäusekörper 2 kann ohne zusätzliche Werkzeuge erfolgen, da der Deckel 18 unter Verwendung der Nasen 20 und 22 einfach in den Gehäusekörper 2 eingehängt wird. Auch bei der oben genannten möglichen Verwendung einer Drehachse (z.B. in Form eines Stiftes oder Splints) kann die Montage und Demontage des Deckels 18 ohne zusätzliche Hilfsmittel erfolgen, da wie oben beschrieben für die Drehverbindung des Deckels 18 mit dem Gehäusekörper 2 keine besonderen Toleranzen eingehalten werden müssen.

Um an dem Anbaugehäuse 1 weitere Vorrichtungen, beispielsweise eine Steckverbindung für Kabel, anzuordnen, weist der Gehäusekörper 2 an seinem der Öffnung 6 benachbarten Ende ein Gewinde 34 auf. Um eine abgedichtete Verbindung zwischen einer an dem Gehäusekörper 2 angeschraubten Vorrichtung und dem Gehäusekörper 2 bereitzustellen, ist in dem Gehäusekörper 2 eine Nut 36 ausgebildet, die als Aufnahme für einen O-Ring 38 dient. Zur Befestigung einer Vorrichtung (z.B. Steckverbindung) an dem Anbaugehäuse 1, kann beispielsweise eine Überwurfmutter (nicht gezeigt) verwendet werden, die auf das Gewinde 34 aufgeschraubt wird und den O-Ring 38 abdichtend kontaktiert. Neben der dadurch bereitgestellten Dichtfunktion des O-Rings 38 verhindert der O-Ring 38 bei entsprechender Dimensionierung einen Verlust der Haltemutter 30. Ferner dient der O-Ring 38 auch als Vibrationsschutz für eine an dem Gehäusekörper 2 angeordnete (angeschraubte) Vorrichtung.

Ein weiterer Vorteil des Anbaugehäuses 1 besteht darin, daß es auch nach einer Konfektionierung, beispielsweise mit einem unter Verwendung des Gewindes 34 angeschraubten Steckverbindung, an einer Befestigungsoberfläche (nicht gezeigt) für den Befestigungsflansch 8 angeordnet werden kann. Wie in Fig. 5 zu sehen, ist der Befestigungsflansch 8 so geformt, daß die Bohrungen 12 in dem zusammengebauten Zustand des Anbaugehäuses 1 zugänglich sind, um entsprechende Befestigungselemente (z.B. Schrauben, Nieten) einzuführen.

Anstelle der Bohrungen 12 können auch an dem Befestigungsflansch 8 ausgebildete Rast- oder Schnappelemente (nicht gezeigt) verwendet werden, die in Wirkverbindung mit einer entsprechenden an der Befestigungsoberfläche für den Befestigungsflansch 8 angeordneten Struktur eine Rast- oder Schnappverbindung für das Anbaugehäuse 1 bereitstellen. Zum Lösen einer solchen Schnappverbindung im zusammengebauten Zustand des Anbaugehäuses 1 sind geeignete Elemente/Strukturen für die Schnappelemente (nicht gezeigt) des Befestigungsflansches 8 wie die Bohrungen 12 in Bereichen anzuordnen, auf die im in Fig. 5 gezeigten Zustand des Anbaukörpers 1 zugegriffen werden kann.

In vergleichbarer Weise kann anstelle des Gewindes 34 zur Anordnung weiterer Vorrichtungen (z.B. Steckverbinder) andere geeignete Verbindungsstrukturen (z.B. Rast- oder Schnappelemente, Elemente für Bajonettverschlüsse) verwendet werden.

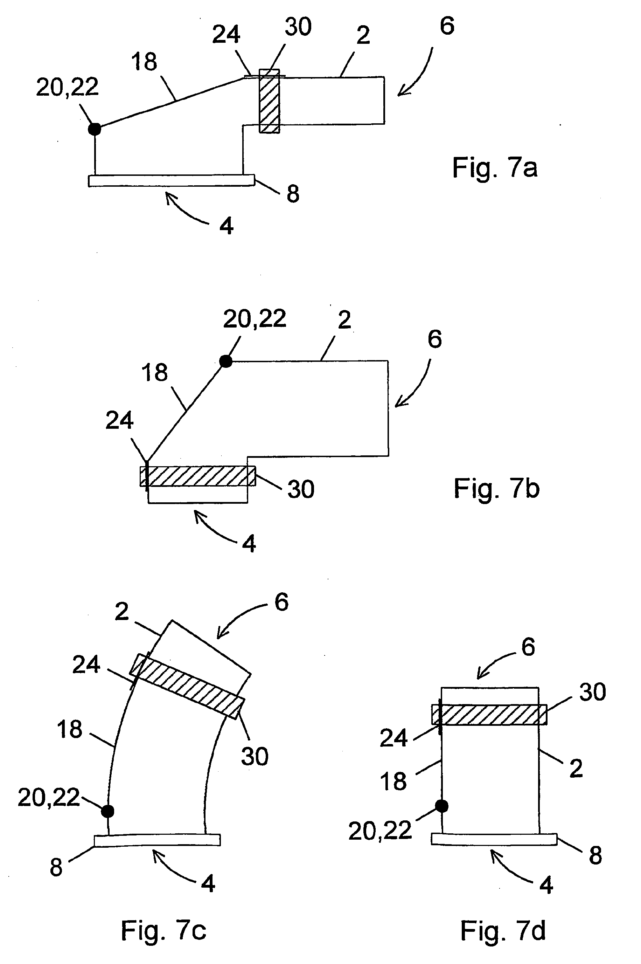

Bezugnehmend auf die Fig. 7a-7d werden weitere Ausführungsformen des Anbaugehäuses erläutert. Im Gegensatz zu dem in den Fig. 1-6 dargestellten Anbaugehäuse 1 weist das in Fig. 7a dargestellte Anbaugehäuse eine Kabeldurchführung (nicht bezeichnet) auf, die in dem sich zu der Öffnung 4 erstreckenden Bereich einen größeren Querschnitt als in dem sich zu der Öffnung 6 erstreckenden Bereich hat. Dadurch kann eine Zugriffsöffnung 14 bereitgestellt werden, die größer als die in den Fig. 1-6 gezeigte Zugriffsöffnung 14 ist. Eine solche vergrößerte Zugriffsöffnung 14 kann in Abhängigkeit von in dem Anbaugehäuse 1 anzuordnenden Komponenten (nicht gezeigt) erforderlich sein oder zumindest deren Anordnung vereinfachen.

Ferner kann die Drehverbindung/das Scharnier für den Deckel 18 auch in einem Bereich des Gehäusekörpers 2 angeordnet sein, in dem bei der in den Fig. 1-6 dargestellten Ausführungsform die Preßfläche 28 angeordnet ist. Dementsprechend ist bei der in Fig. 7b gezeigten Ausführungsform die Preßfläche 28 in einem der Öffnung 4 benachbarten Bereich der Außenumfangsfläche des Gehäusekörpers 2 angeordnet. Wie oben beschrieben, dient die Haltemutter 30 in Verbindung mit einem dem Gewinde 32 entsprechenden Gewinde zur Sicherung des Deckels 18 an dem Gehäusekörper 2. Um die Haltemutter 30 an dem Gehäusekörper 2 anzuordnen, ist bei der Herstellung des Anbaugehäuses 1 der Befestigungsflansch 8 nachträglich auszubilden. Insbesondere in diesem Fall bietet es sich an, anstelle des Befestigungsflansches 8 wie oben beschrieben geeignete Rast- oder Schnappelemente zu verwenden.

Außerdem ist es vorgesehen, anstelle eines gewinkelten Gehäusekörpers einen gekrümmten Gehäusekörper (Fig. 7c) oder einen langgestreckten Gehäusekörper (Fig. 7d) zu verwenden. Bei einem gekrümmten Gehäusekörper ist insbesondere darauf zu achten, daß der entsprechende Bereich zum Anordnen der Haltemutter 30 geeignet gestaltet ist. Die Verwendung eines langgestreckten Gehäusekörpers für das Anbaugehäuse kann dann erforderlich sein, wenn auf den Innenraum desselben zugegrifforderlich sein, wenn auf den Innenraum desselben zugegriffen werden soll, ohne dabei das Anbaugehäuse beispielsweise von einem Schaltschrank demontieren und an dem Anbaugehäuse angebrachte Vorrichtungen (z.B. Steckverbinder) entfernen zu müssen.

## Patentansprüche

1. Anbaugehäuse (1) für elektrische und/oder optische Leiter, Fluidleitungen, mechanische Komponenten, wie Gelenkwellen oder Bowdenzüge, und dergleichen, mit:
- einem Gehäusekörper (2),
- einer sich durch den Gehäusekörper (2) erstreckenden Durchführung,
- einer Zugriffsöffnung (14) auf die Durchführung durch den Gehäusekörper (2),
- einem mit dem Gehäusekörper (2) bewegbar verbundenen Deckel (18) zum Verschließen und Freigeben der Zugriffsöffnung (14), und
- einer Halteeinrichtung (30) zum Sichern des Deckels (18) in dessen geschlossenem Zustand mittels einer Klemmverbindung an dem Gehäusekörper (2), wobei
- der Deckel (18) einen verlängerten Bereich (24) aufweist, und
- der verlängerte Bereich (24) im geschlossenen Zustand des Deckels (18) zwischen der Halteeinrichtung (30) und dem Gehäusekörper (2) gesichert ist,
**dadurch gekennzeichnet, daß**
- der verlängerte Bereich (24) einen konturierten Bereich (26) umfaßt, der in dem Deckel (18) ausgeformte Ausnehmungen aufweist.

2. Anbaugehäuse gemäß Anspruch 1, **dadurch gekennzeichnet, daß**
- der Gehäusekörper (2) einen Kontaktbereich (28) aufweist, der zum formschlüssigen Kontakt mit dem verlängerten Bereich (24) des Deckels (18) ausgebildet ist, und
- der verlängerte Bereich (24) des Deckels (18) im geschlossenen Zustand des Deckels (18) zwischen der Halteeinrichtung (30) und dem Kontaktbereich (28) gesichert ist.

3. Anbaugehäuse gemäß Anspruch 1 oder 2, **dadurch gekennzeichnet, daß**
der verlängerte Bereich (24) wenigstens in dem konturierten Bereich (26) elastisch verformbar ist.

4. Anbaugehäuse gemäß einem der vorhergehenden Ansprüche,
**dadurch gekennzeichnet, daß**
im Bereich der Zugriffsöffnung (14) ein elastisches Dichtelement (16) angeordnet ist, das im geschlossenen und gesicherten Zustand des Deckels (18) aufgrund einer Wirkverbindung mit diesem elastisch verformt ist.

5. Anbaugehäuse gemäß einem der vorhergehenden Ansprüche,
**dadurch gekennzeichnet, daß**
- die Halteeinrichtung (30) eine Haltemutter ist, und
- der Gehäusekörper (2) zum Anbringen der Halteeinrichtung (30) ein Gewinde (32) aufweist.

6. Anbaugehäuse gemäß Anspruch 5, **dadurch gekennzeichnet, daß** das Gewinde (32) in Längsrichtung der Durchführung von dem Kontaktbereich (28) beabstandet ist oder den Kontaktbereich (28) umfaßt.

7. Anbaugehäuse gemäß einem der Ansprüche 1 bis 4, **dadurch gekennzeichnet, daß**
die Halteeinrichtung (30) eine auf den Gehäusekörper (2) aufschiebbare Haltehülse ist.

8. Anbaugehäuse gemäß Anspruch 7, **dadurch gekennzeichnet, daß** der Gehäusekörper (2) zur lösbaren Sicherung der Haltehülse Rastelemente und/oder Klemmelemente aufweist.

9. Anbaugehäuse gemäß Anspruch 7 oder 8, **dadurch gekennzeichnet, daß**
die Haltehülse zum Lösen der Sicherung an dem Gehäusekörper (2) elastisch verformbar ist.

10. Anbaugehäuse gemäß einem der vorhergehenden Ansprüche,
**dadurch gekennzeichnet, daß**
der Gehäusekörper (2) an einem ersten Ende einen Befestigungsflansch (8) mit darin ausgebildeten Bohrungen (12) aufweist, auf die im geschlossenen Zustand des Deckels (18) zugegriffen werden kann.

11. Anbaugehäuse gemäß einem der Ansprüche 1 bis 9, **dadurch gekennzeichnet, daß**
der Gehäusekörper (2) an einem ersten Ende Rastelemente aufweist, die im geschlossenen Zustand des Deckels (18) betätigbar sind.

12. Anbaugehäuse gemäß einem der vorhergehenden Ansprüche,
**dadurch gekennzeichnet, daß**
- der Deckel (18) unter Verwendung von an dem Deckel (18) und dem Gehäusekörper (2) ausgebildeten Strukturen (20, 22) in den Gehäusekörper (2) bewegbar eingehängt ist, oder
- der Deckel (18) mit diesem und dem Gehäusekörper (2) in Wirkverbindung stehenden Achsen oder Zapfen bewegbar mit dem Gehäusekörper (2) verbunden ist.

13. Anbaugehäuse gemäß einem der vorhergehenden Ansprüche,
**dadurch gekennzeichnet, daß**
der Gehäusekörper (2) an einem zweiten dem ersten Ende gegenüberliegenden Ende Befestigungselemente (34) für an dem Gehäusekörper (2) anzuordnende Vorrichtungen aufweist.

14. Anbaugehäuse gemäß einem der vorhergehenden Ansprüche,
**dadurch gekennzeichnet, daß**
der Gehäusekörper (2) ein gewinkelter, gekrümmter oder langgestreckter Körper ist.

15. Anbaugehäuse gemäß einem der vorhergehenden Ansprüche,
**dadurch gekennzeichnet, daß**
die Durchführung durch den Gehäusekörper (2) einen im wesentlichen runden oder rechteckigen Querschnitt hat.

16. Anbaugehäuse gemäß einem der Ansprüche 5 bis 15, **dadurch gekennzeichnet, daß**
der Gehäusekörper (2) zumindest im Bereich des Gewindes (32) einen runden Querschnitt hat.

## Claims

1. A mounting housing (1) for electrical and/or optical conductors, fluid lines, mechanical components such as articulated shafts or Bowden cables and the like, comprising:
- a housing body (2),
- a feed-through extending through the housing body (2),
- an access opening (14) to the feed-through through the housing body (2),
- a cover (18) movably connected to the housing body (2) for closing and clearing the access opening (14), and
- retaining means (30) for securing the cover (18) in its closed state by means of a clamping connection at the housing body (2), wherein
- the cover (18) comprises an extended area (24), and
- the extended area (24) in the closed state of the cover (18) is secured between the retaining means (30) and the housing body (2),
**characterized in that**
- the extended area (24) comprises a contoured area (26) which has recesses formed in the cover (18).

2. The mounting housing according to Claim 1, **characterised in that**
- the housing body (2) comprises a contact area (28) which is formed for a positive contact with the extended area (24) of the cover (18), and
- the extended area (24) of the cover (18) in the closed state of the cover (18) is secured between the retaining means (30) and the contact area (28).

3. The mounting housing according to Claim 1 or 2, **characterised in that** the extended area (24) is elastically deformable at least in the contoured area (26).

4. The mounting housing according to one of the previous claims, **characterised in that**
an elastic sealing element (16) is arranged in the area of the access opening (14), which in the closed and secured state of the cover (18) is elastically deformed due to an active connection with same.

5. The mounting housing according to one of the previous claims, **characterised in that**
- the retaining means (30) is a retaining nut, and
- the housing body (2) comprises a thread (32) for installing the retaining means (30).

6. The mounting housing according to Claim 5, **characterised in that** the thread (32) is spaced in the longitudinal direction of the feed-through from the contact area (28) or encompasses the contact area (28).

7. The mounting housing according to one of Claims 1 to 4, **characterised in that** the retaining means (30) is a retaining sleeve adapted to be slid on the housing body (2).

8. The mounting housing according to Claim 7, **characterised in that** the housing body (2) comprises locking elements and/or clamping elements for releasably securing the retaining sleeve.

9. The mounting housing according to Claim 7 or 8, **characterised in that** the retaining sleeve is elastically deformable for releasing its secured position at the housing body (2).

10. The mounting housing according to one of the previous claims, **characterised in that**
the housing body (2) comprises at a first end a mounting flange (8) with holes (12) formed therein which can be accessed in the closed state of the cover (18).

11. The mounting housing according to one of Claims 1 to 9, **characterised in that**
the housing body (2) comprises locking elements at a first end, which can be actuated in the closed state of the cover (18).

12. The mounting housing according to one of the previous claims, **characterised in that**
- the cover (18) is movably hooked in the housing body (2) by using structures (20, 22) formed at the cover (18) and the housing body (2), or
- the cover (18) is movably connected with the housing body (2) by means of shafts or pins being in active connection with same and the housing body (2).

13. The mounting housing according to one of the previous claims, **characterised in that**
the housing body (2) comprises fastening elements (34) at a second end opposite the first end for devices to be arranged at the housing body (2).

14. The mounting housing according to one of the previous claims, **characterised in that**
the housing body (2) is an angled, curved, or oblong body.

15. The mounting housing according to one of the previous claims, **characterised in that**
the feed-through through the housing body (2) has an essentially round or rectangular cross-section.

16. The mounting housing according to one of Claims 5 to 15, **characterised in that**
the housing body (2) has a round cross-section at least in the area of the thread (32).

## Revendications

1. Boîtier rapporté (1) pour des conducteurs électriques et/ou optiques, des conduites de fluide, des composants mécaniques, tels que des arbres d'articulation ou des câbles sous gaine et éléments similaires, comportant
- un corps de boîtier (2),
- un passage traversant le corps de boîtier (2),
- une ouverture d'accès (14) au passage traversant le corps de boîtier (2),
- un couvercle (18) assemblé de manière mobile avec le corps de boîtier (2) et destiné à fermer et à libérer l'ouverture d'accès (14), et
- un dispositif de fixation (30) destiné à bloquer le couvercle (18) dans la position fermée de celui-ci au moyen d'un assemblage serré sur le corps de boîtier (2),
- le couvercle (18) comportant une zone en saillie (24), et
- la zone en saillie (24) étant bloquée, dans la position fermée du couvercle (18), entre le dispositif de fixation (30) et le corps de boîtier (2),
**caractérisé en ce que**
- la zone en saillie (24) comporte une zone profilée (26) qui comporte des évidements ménagés dans le couvercle (18).

2. Boîtier rapporté selon la revendication 1, **caractérisé en ce que** le corps de boîtier (2) comporte une zone de contact (28), qui est réalisée pour un contact par conjugaison de forme avec la zone en saillie (24) du couvercle (18), et la zone en saillie (24) du couvercle (18) est bloquée, dans la position fermée du couvercle (18), entre le dispositif de fixation (30) et la zone de contact (28).

3. Boîtier rapporté selon la revendication 1 ou 2, **caractérisé en ce que** la zone en saillie (24) est apte à se déformer élastiquement au moins dans la zone profilée (26).

4. Boîtier rapporté selon l'une quelconque des revendications précédentes, **caractérisé en ce que**, dans la zone de l'ouverture d'accès (14), est agencé un élément d'étanchéité (16) qui, dans la position fermée et bloquée du couvercle (18), est déformé élastiquement en raison d'une liaison active avec ce dernier.

5. Boîtier rapporté selon l'une quelconque des revendications précédentes, **caractérisé en ce que** le dispositif de fixation (30) est un écrou de fixation et **en ce que** le corps de boîtier (2) comporte un filetage (32) pour le montage du dispositif de fixation (30).

6. Boîtier rapporté selon la revendication 5, **caractérisé en ce que** le filetage (32), dans le sens longitudinal du passage, est écarté de la zone de contact (28) ou comporte la zone de contact (28).

7. Boîtier rapporté selon l'une quelconque des revendications 1 à 4, **caractérisé en ce que** le dispositif de fixation (30) est un manchon de fixation pouvant être emmanché sur le corps de boîtier (2).

8. Boîtier rapporté selon la revendication 7, **caractérisé en ce que** le corps de boîtier (2) comporte des éléments d'arrêt et/ou des éléments de serrage pour un blocage amovible du manchon de fixation.

9. Boîtier rapporté selon la revendication 7 ou 8, **caractérisé en ce que** le manchon de fixation peut être déformé élastiquement pour désolidariser le blocage sur le corps de boîtier (2).

10. Boîtier rapporté selon l'une quelconque des revendications précédentes, **caractérisé en ce que** le corps de boîtier (2) comporte, sur une première extrémité, une bride de fixation (8) avec des forures (12) réalisées dans celle-ci et auxquelles il est possible d'accéder dans la position fermée du couvercle (18).

11. Boîtier rapporté selon l'une quelconque des revendications 1 à 9, **caractérisé en ce que** le corps de boîtier (2), sur une première extrémité, comporte des éléments d'arrêt qui peuvent être manoeuvrés dans la position fermée du couvercle (18).

12. Boîtier rapporté selon l'une quelconque des revendications précédentes, **caractérisé en ce que** le couvercle (18) peut être accroché de manière mobile dans le corps de boîtier (2) moyennant l'utilisation de structures (20, 22) réalisées sur le couvercle (18) et le corps de boîtier (2), ou en ce que le couvercle (18) est assemblé de manière mobile avec le corps de boîtier (2) au moyen d'axes ou goupilles en liaison active avec ledit couvercle et le corps de boîtier (2).

13. Boîtier rapporté selon l'une quelconque des revendications précédentes, **caractérisé en ce que** le corps de boîtier (2), au niveau d'une deuxième extrémité opposée à la première extrémité, comporte des éléments de fixation (34) pour des dispositifs à agencer sur le corps de boîtier (2).

14. Boîtier rapporté selon l'une quelconque des revendications précédentes, **caractérisé en ce que** le corps de boîtier (2) est un corps coudé, courbe ou allongé.

15. Boîtier rapporté selon l'une quelconque des revendications précédentes, **caractérisé en ce que** le passage traversant le corps de boîtier (2) a une section sensiblement ronde ou rectangulaire.

16. Boîtier rapporté selon l'une quelconque des revendications 5 à 15, **caractérisé en ce que** le corps de boîtier (2), au moins dans la zone du filetage (32), a une section ronde.
